# EUROPEAN PATENT APPLICATION

(11) **EP 2 884 757 A1**
(43) Date of publication of application: **17.06.2015**
(21) Application number: 13827449.3
(22) Date of filing: 02.08.2013
(51) Int. Cl.: H04N 21/266, H04N 21/63

(54) **INTERNET PROTOCOL TELEVISION CONTENT SYNCHRONIZATION METHOD AND SYSTEM**

(30) Priority: 07.08.2012 CN 201210278669
(71) Applicant: ZTE Corporation, Shenzhen, Guangdong 518057 (CN)
(72) Inventor: REN, Guangfu, Shenzhen Guangdong 518057 (CN)
(74) Representative: Novagraaf Technologies
(86) International application number: PCT/CN2013/080749
(87) International publication number: WO 2014/023194

(57) **Abstract**

Disclosed are a method and system for synchronizing IPTV content. The method comprises: a CMS sends a content synchronous request corresponding to service content to an IPTV portal system, and sending a content issue request corresponding to the service content to a CDN; the IPTV portal system creates a service logic menu corresponding to the service content according to the content synchronous request; the CDN downloads entity data corresponding to the service content according to the content issue request; and the CMS enables the service logic menu created by the IPTV portal system and the entity data downloaded by the CDN to be in one-to-one correspondence. According to the present invention, the CDN is independent from the original IPTV portal system structure, and the coupling degree between the IPTV portal system and the CDN is lowered, so that the issue process is more independent, the synchronization efficiency of content data is improved, and the viewing experience of users is improved.

## Description

### Technical Field

The present invention relates to the technical field of interactive personality television, and in particular to a method and system for synchronizing Interactive Personality Television (IPTV) content.

### Background

With the development of multimedia services nowadays, traditional television, voice and network services are more difficult to meet the people's ever-increasing needs. Users make an urgent demand on operators for providing more video contents with higher quality and better experience. For this reason, the IPTV has developed rapidly in the world in recent years. The IPTV integrates multiple technologies, such as Internet, multimedia, and communication, and is a brand-new technology which provides multiple interactive services including a digital television service to home users by using a broadband cable television network.

The current IPTV mainly comprises on-demand broadcast, living broadcast, and various customized services. In general, data volume of the on-demand broadcast is very large: entity data contains a huge number of audio and video source files in various formats, which is corresponding to complicated metadata. The living broadcast is a function which is most commonly used by the user and is updated most frequently. As the market differentiation gradually enhances, various device manufacturers pay more and more attention on the problem of how to integrate and manage large media data in the IPTV. All IT manufacturers are concerned about problems of how to enable content management to be more efficient, and how to be able to provide more full and personalized service. In a framework of an original IPTV portal system, after content data is added or modified, an issue process of the content is performed. Since the coupling degree between a service side and a CDN (content delivery network) is higher, it is required to execute an asynchronous task firstly; and after the issue of the content is completed, the content is created into a default program, thereby greatly limiting the IPTV portal system in the respect of the synchronization efficiency of the content data.

### Summary

The embodiments of the present invention provide a method and system for synchronizing IPTV content to improve the synchronization efficiency of content data effectively.

An embodiment of the present invention provides a method for synchronizing IPTV content, and the method comprises:
a Content Management System (CMS) sends a content synchronous request corresponding to service content to an interactive Personality television (IPTV) portal system, and sends a content issue request corresponding to the service content to a Content Delivery Network (CDN);
the IPTV portal system creates a service logic menu corresponding to the service content according to the content synchronous request; the CDN downloads entity data of the service content according to the content issue request; and
the CMS enables the service logic menu created by the IPTV portal system and the entity data downloaded by the CDN to be in one-to-one correspondence.

Preferably, after the IPTV portal system creates a service logic menu corresponding to the service content according to the content synchronous request, the method further comprises:
the IPTV portal system feeds a synchronous execution result back to the CMS.

Preferably, before the CMS enables the service logic menu created by the IPTV portal system and the entity data downloaded by the CDN to be in one-to-one correspondence, the method further comprises:
when detecting that the CMS fails to execute a synchronization according to the synchronous execution result, the CMS resends a content synchronous request corresponding to the service content to the IPTV portal system.

Preferably, after the CDN downloads the entity data of the service content according to the content issue request, the method further comprises:
the CDN feeds an issue execution result back to the CMS.

Preferably, before the CMS enables the service logic menu created by the IPTV portal system and the entity data downloaded by the CDN to be in one-to-one correspondence, the method further comprises:
when detecting that the CMS fails to execute an issue according to the issue execution result, the CMS resends the content issue request corresponding to the service content to the CDN.

The embodiments of the present invention further provide a system for synchronizing IPTV content, comprising a CMS, an IPTV portal system, and a CDN;
the CMS is configured to send a content synchronous request corresponding to service content to the IPTV portal system, to send a content issue request corresponding to the service content to the CDN, and to enable a service logic menu created by the IPTV portal system and entity data downloaded by the CDN to be in one-to-one correspondence;
the IPTV portal system is configured to create the service logic menu corresponding to the service content according to the content synchronous request; and
the CDN is configured to download the entity data of the service content according to the content issue request.

Preferably, the IPTV portal system is further configured to feed a synchronous execution result back to the CMS.

Preferably, the CMS is further configured to resend, when detecting that the CMS failed to execute synchronization according to the synchronous execution result, the content synchronous request corresponding to the service content to the IPTV portal system.

Preferably, the CDN is further configured to feed an issue execution result back to the CMS.

Preferably, the CMS is further configured to resend, when detecting that the CMS fails to execute an issue according to the issue execution result, the content issue request corresponding to the service content to the CDN.

According to the embodiments of the present invention, the CDN is independent from the original IPTV portal system structure, and the coupling degree between the IPTV portal system and the CDN is lowered, so that the issue process is more independent, the synchronization efficiency of content data is improved, and the viewing experience of users is improved.

### Brief Description of the Drawings

Fig. 1 is a flow chart of a method for synchronizing IPTV content according to a first embodiment of the present invention;
Fig. 2 is a flow chart of a method for synchronizing IPTV content according to a second embodiment of the present invention; and
Fig. 3 is a schematic structural diagram of a system for synchronizing IPTV content according to an embodiment of the present invention.

Functional features and advantages of the embodiments of the present invention will be further described in detail in combination with embodiments and with reference to accompanying drawings.

### Detailed Description of the Embodiments

It should be understood that specific embodiments described here are only used for illustrating the present invention and not intended to limit the present invention.

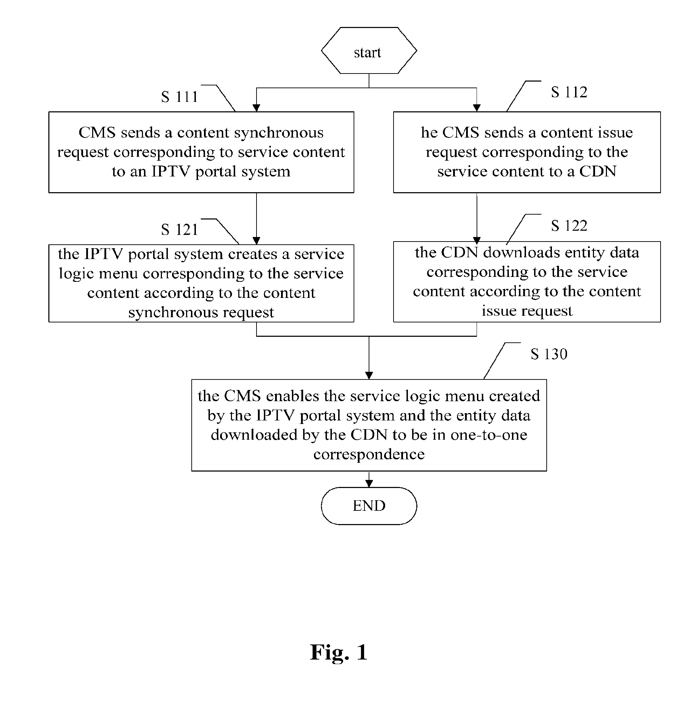

As shown in Fig. 1, Fig. 1 is a flow chart of a method for synchronizing IPTV content according to a first embodiment of the present invention; and the method for synchronizing the IPTV content mentioned in the embodiment comprises:
step S111, a Content Management System (CMS) sends a content synchronous request corresponding to service content to an IPTV portal system, and performs step S121;
step S121, the IPTV portal system creates a service logic menu corresponding to the service content according to the content synchronous request, and perform step S130; and
the CMS initiates a content synchronization operation and sends a synchronous message to the IPTV portal system. In the IPTV portal system, a content synchronization is mainly performed via an interface machine. In the present embodiment, when service content is increased, the IPTV portal system does not need to perform any interaction with the CDN any more; therefore, after receiving a service content synchronous request, the interface machine of the IPTV portal system directly adds the service content into the service logic menu to create a default program, for example, comprising program content, basic data, and content metadata, so that the service content may be displayed. In addition, since the IPTV portal system is independent from the CDN, the IPTV portal system directly configures a state corresponding to the service content to be successful, without waiting for synchronization of a state of the CDN; and successfully issued service contents will be displayed on a display interface of the IPTV portal system, and these service contents may be adjusted correspondingly.

Step S 112, the CMS sends a content issue request corresponding to the service content to a Content Delivery Network (CDN), and performs step S122;
step S122, the CDN downloads entity data corresponding to the service content according to the content issue request, and performs step S 130;
while sending the content synchronous request to the IPTV portal system, the CMS also sends a service content issue request to the CDN. In addition, the CMS also provides an entity data download link corresponding to the service content for the CDN so that the CDN downloads the entity data corresponding to the service content, thus completing the delivery of the service content.

Step S 130, the CMS enables the service logic menu created by the IPTV portal system and the entity data downloaded by the CDN to be in one-to-one correspondence.

In the whole process, the consistency of the data of the CDN and the IPTV portal system is ensured by the CMS uniformly; and the CMS enables the entity data downloaded by the CDN and the service logic menu of the IPTV portal system to be in one-to-one correspondence.

According to the present embodiment, the CDN is independent from the original IPTV portal system structure, and the coupling degree between the IPTV portal system and the CDN is lowered, so that the issue process is more independent, the synchronization efficiency of content data is improved, and the viewing experience of users is improved.

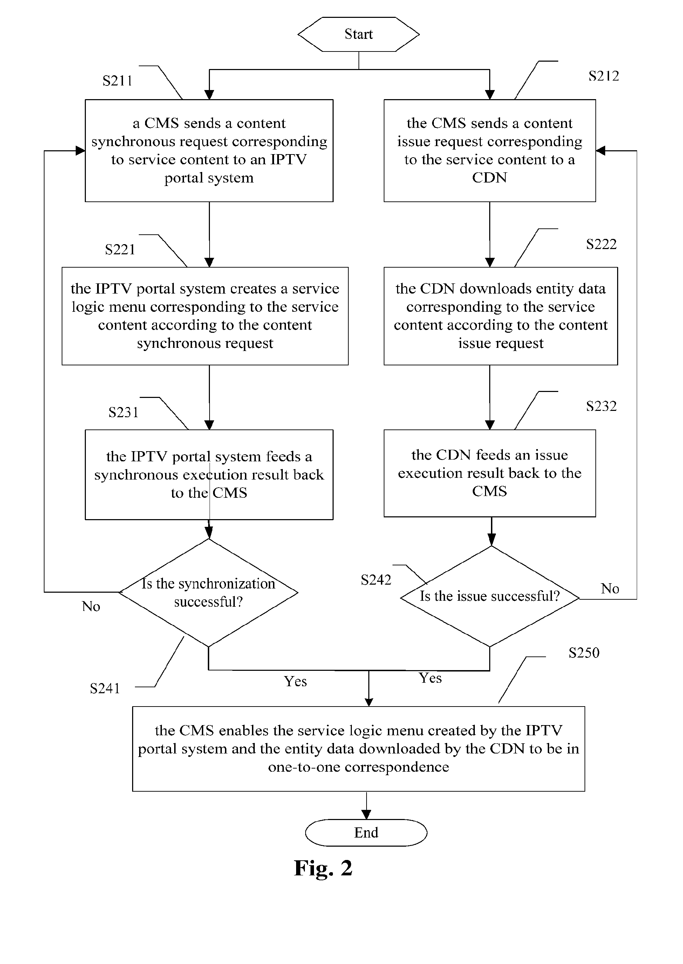

As shown in Fig. 2, Fig. 2 is a flow chart of a method for synchronizing IPTV content according to a second embodiment of the present invention.
step S211, a CMS sends a content synchronous request corresponding to service content to an IPTV portal system, and performs step S221;
step S221, the IPTV portal system creates a service logic menu corresponding to the service content according to the content synchronous request, and performs step S231;
step S231, the IPTV portal system feeds a synchronous execution result back to the CMS, and performs step S241;
step S241, the CMS detects whether the CMS success to execute a synchronization according to a synchronous execution result; if so, turn to step S250, and if not, re-perform step S211;
for ensuring the consistency of the data of the CDN and the IPTV portal system, the CMS detects the validity of the synchronous execution according to the received synchronous execution result; and when the synchronous execution is failed, the CMS resends a synchronous request message.

Step S212, the CMS sends a content issue request corresponding to the service content to a Content Delivery Network (CDN), and performs step S222;
step S222, the CDN downloads entity data corresponding to the service content according to the content issue request, and performs step S232;
step S232, the CDN feeds an issue execution result back to the CMS, and performs step S242;
step S242, the CMS detects whether the CMS is success to execute an issue according to the issue execution result; if so, turn to step S250, and if not, re-perform step S212;
after an issue operation is completed, the CDN reports the issue execution result to the CMS. For ensuring the consistency of the data of the CDN and the IPTV portal system, the CMS detects the validity of the issue execution according to the received issue execution result; and when the issue execution is failed, the CMS resends an issue request message.

Step S250, the CMS enables the service logic menu created by the IPTV portal system and the entity data downloaded by the CDN to be in one-to-one correspondence.

According to the present embodiment, the CDN is independent from the original IPTV portal system structure, and the coupling degree of the IPTV portal system and the CDN is lowered, so that the issue process is more independent, the synchronization efficiency of content data is improved, and the viewing experience of users is improved; moreover, the CMS ensures the consistency of the data of the CDN and the IPTV portal system, comprising the correspondence of the entity data and the state of the metadata; and when any side fails to execute the task, the CMS resends a request message, thus ensuring that the whole data synchronization is completed successfully.

In combination with the above-mentioned embodiments, the present embodiment further describes the following several synchronization situations.

### 1. Synchronization Process of Common Content

A content management platform packs content; packed content service information is synchronized to an IPTV service management system; and the IPTV service management system performs product packing on the received content, and synchronizes packed information to an IPTV portal system via an interface machine.

After receiving a request for newly adding content, the interface machine does not care about an issue result of the content any more, directly configures the content to be issued successfully, and creates a default program. Based on a new implementation way, all the steps regarding adding content are uniformly sent to a WEB management module of the IPTV in a manner of an xml message for processing; and after that, a service generates a content record, and the content is distinguished by a source and a serial number of the content itself. Similarly, with regard to a modification to the content, a reissuing operation is not performed any more, the service record is directly modified, instead. The correspondence of the entity data and the state of the metadata needs to be ensured by the CMS.

### 2. Synchronization Processes of Several Special Contents

### (1) Program List Recording Plan Implementation Process:

A recording plan and a program list in a system are taken as different objects to be processed respectively. The recording plan must correspond to the program list, and after the service of the WEB management module of the IPTV is called to complete data adding, the interface machine updates, by analysing a reported message of the CDN, a state corresponding to the recording plan. In this way, a recording plan request is processed rapidly, and data consistency of the recording plan in two modules is also ensured.

### (2) Channel Implementation Process:

After receiving a new adding request of a channel, the interface machine configures a corresponding column and station caption therefor, and finally performs issue; all operations are encapsulated into a request message to be sent to the WEB management module of the IPTV; and at this time, the service is called, to establish a corresponding data record. The same channel may be corresponding to resources of different code rates; and when it is created, different physical sub-channels are established for the same logic main channel. In this mode, after being added, the channel is configured to be an issue state automatically.

### (3) Product Package Process:

A BMS platform sends operation request information about a product package to an interface machine; a package, a product and a service are respectively added; and the package is associated with the product, and the product contains the service. Adding of the package enables combination of the service more diversity, and also can provide a more personalized option for a user.

According to the above-mentioned synchronization situations, the CDN is independent from the original IPTV portal system structure, and the coupling degree of the IPTV portal system and the CDN is lowered, so that the issue process is more independent, the synchronization efficiency of content data is improved, and the viewing experience of users is effectively improved.

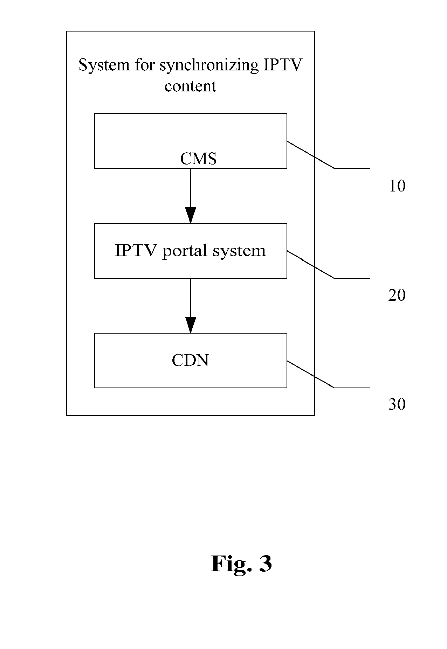

As shown in Fig. 3, Fig. 3 is a schematic structural diagram of a system for synchronizing IPTV content according to an embodiment of the present invention. The system for synchronizing the IPTV content mentioned in the embodiment comprises a content management system (CMS) 10, an interactive personality television (IPTV) portal system 20, and a content delivery network (CDN) 30;
the CMS 10 is configured to send a content synchronous request corresponding to service content to the IPTV portal system 20, to send a content issue request corresponding to the service content to the CDN 30, and to enable a service logic menu created by the IPTV portal system 20 and entity data downloaded by the CDN 30 to be in one-to-one correspondence;
the IPTV portal system 20 is configured to create the service logic menu corresponding to the service content according to the content synchronous request; and
the CDN 30 is configured to download the entity data corresponding to the service content according to the content issue request.

In the present embodiment, the CMS (content management system) 10 initiates a content synchronization operation and sends a synchronous message to the IPTV portal system 20. In the IPTV portal system 20, the content synchronization is mainly performed via an interface machine. In the present embodiment, when service content is increased, the IPTV portal system 20 does not need to perform any interaction with the CDN 30 any more; therefore, after receiving a service content synchronous request, the interface machine of the IPTV portal system 20 directly adds the service content into the service logic menu to create a default program, for example, comprising program content, basic data, and content metadata, so that the service content can be displayed. In addition, since the IPTV portal system 20 is independent from the CDN 30, the IPTV portal system 20 directly configures a state corresponding to the service content to be successful, without waiting for synchronization of a state of the CDN 30; and successfully issued service contents will be displayed on a display interface of the IPTV portal system 20, and these service contents may be adjusted correspondingly. While sending the content synchronous request to the IPTV portal system 20, the CMS 10 also sends a service content issue request to the CDN 30. In addition, the CMS 10 also provides an entity data download link corresponding to the service content for the CDN 30 so that the CDN 30 downloads the entity data corresponding to the service content, thus completing the issue of the service content. In the whole process, the consistency of the data of the CDN 30 and the IPTV portal system 20 is ensured by the CMS 10 uniformly; and the CMS 10 enables the entity data downloaded by the CDN 30 and the service logic menu of the IPTV portal system 20 to be in one-to-one correspondence. According to the present embodiment, the CDN 30 is independent from the original IPTV portal system 20 structure, and the coupling degree of the IPTV portal system 20 and the CDN 30 is lowered, so that the issue process is more independent, the synchronization efficiency of content data is improved, and the viewing experience of users is improved.

In the present embodiment of the present invention, the IPTV portal system 20 is further configured to feed a synchronous execution result back to the CMS 10.

The CMS 10 is further configured to resend, when detecting that the CMS 10 fails to execute synchronization according to the synchronous execution result, the content synchronous request corresponding to the service content to the IPTV portal system 20.

The CDN 30 is further configured to feed an issue execution result back to the CMS 10.

The CMS 10 is further configured to resend, when detecting that the CMS 10 fails to execute an issue according to the issue execution result, the content issue request corresponding to the service content to the CDN 30.

In the present embodiment, after a synchronization operation is completed, the IPTV portal system 20 reports the synchronous execution result to the CMS 10; and after an issue operation is completed, the CDN 30 reports the issue execution result to the CMS 10. For ensuring the consistency of the data of the CDN 30 and the IPTV portal system 20, the CMS 10 respectively detects the validity of the synchronous execution and the validity of the issue execution according to a received synchronous execution result and issue execution result; and when any side fails to execute the task, the CMS 10 resends a request message, thus ensuring that the whole data synchronization is completed successfully. According to the present embodiment, the CDN 30 is independent from the original IPTV portal system 20 structure, and the coupling degree of the IPTV portal system 20 and the CDN 30 is lowered, so that the issue process is more independent, the synchronization efficiency of content data is improved, and the viewing experience of users is improved; moreover, the CMS 10 ensures the consistency of the data of the CDN 30 and the IPTV portal system 20, comprising the correspondence of the entity data and the state of the metadata.

The above description is only the preferred embodiments of the present invention and is not intended to limit the patent scope of the present invention. Any transformation of equivalent structures or equivalent procedures made based on the contents of the specification and drawings of the present invention, or applied in other related technical fields directly or indirectly shall fall within the scope of protection of the present invention.

## Claims

1. A method for synchronizing Interactive Personality Television (IPTV) content, **characterized by** comprising:
a Content Management System (CMS) sending a content synchronous request corresponding to service content to an IPTV portal system, and sending a content issue request corresponding to the service content to a Content Delivery Network (CDN);
the IPTV portal system creating a service logic menu corresponding to the service content according to the content synchronous request; the CDN downloading entity data corresponding to the service content according to the content issue request; and
the CMS enabling the service logic menu created by the IPTV portal system and the entity data downloaded by the CDN to be in one-to-one correspondence.

2. The method for synchronizing the IPTV content according to claim 1, **characterized in that** after the IPTV portal system creates the service logic menu corresponding to the service content according to the content synchronous request, the method further comprises:
the IPTV portal system feeding a synchronous execution result back to the CMS.

3. The method for synchronizing the IPTV content according to claim 2, **characterized in that** before the CMS enables the service logic menu created by the IPTV portal system and the entity data downloaded by the CDN to be in one-to-one correspondence, the method further comprises:
when detecting that the CMS failed to execute a synchronization according to the synchronous execution result, the CMS resending a content synchronous request corresponding to the service content to the IPTV portal system.

4. The method for synchronizing IPTV content according to any one of claims 1 to 3, **characterized in that** after the CDN downloads the entity data corresponding to the service content according to the content issue request, the method further comprises:
the CDN feeding an issue execution result back to the CMS.

5. The method for synchronizing the IPTV content according to claim 4, **characterized in that** before the CMS enabling the service logic menu created by the IPTV portal system and the entity data downloaded by the CDN to be in one-to-one correspondence, the method further comprises:
when detecting that the CMS fails to execute an issue according to the issue execution result, the CMS resending a content issue request corresponding to the service content to the CDN.

6. A system for synchronizing interactive Personality Television (IPTV) content, **characterized by** comprising a Content Management System (CMS), an IPTV portal system, and a Content Delivery Network (CDN); wherein
the CMS is configured to send a content synchronous request corresponding to service content to the IPTV portal system, to send a content issue request corresponding to the service content to the CDN, and to enable a service logic menu created by the IPTV portal system and entity data downloaded by the CDN to be in one-to-one correspondence;
the IPTV portal system is configured to create the service logic menu corresponding to the service content according to the content synchronous request; and
the CDN is configured to download the entity data corresponding to the service content according to the content issue request.

7. The system for synchronizing the IPTV content according to claim 6, **characterized in that** the IPTV portal system is further configured to feed a synchronous execution result back to the CMS.

8. The system for synchronizing the IPTV content according to claim 7, **characterized in that** the CMS is further configured to resend, when detecting that the CMS fails to execute a synchronization according to the synchronous execution result, the content synchronous request corresponding to the service content to the IPTV portal system.

9. The system for synchronizing the IPTV content according to any one of claims 6 to 8, **characterized in that** the CDN is further configured to feed an issue execution result back to the CMS.

10. The system for synchronizing the IPTV content according to claim 9, **characterized in that** the CMS is further configured to resend, when detecting the CMS fails to execute an issue according to the issue execution result, the content issue request corresponding to the service content to the CDN.
